# EUROPEAN PATENT SPECIFICATION

(11) **EP 1 792 492 B1**
(45) Date of publication and mention of the grant of the patent: **04.12.2013**
(21) Application number: 05802101.5
(22) Date of filing: 22.09.2005
(51) Int. Cl.: H04N 7/24

(54) **VIDEO DEMULTIPLEXER AND DECODER WITH EFFICIENT DATA RECOVERY**
VIDEODEMULTIPLEXER UND DEKODIERER MIT EFFIZIENTER DATENRÜCKGEWINNUNG
DEMULTIPLEXEUR ET DECODEUR VIDEO A RECUPERATION EFFICACE DE DONNEES

(30) Priority: 22.09.2004 US 947981
(43) Date of publication of application: 06.06.2007
(73) Proprietor: Qualcomm Incorporated, San Diego, CA 92121 (US)
(72) Inventor: LEE, Yen-Chi, San Diego, CA 92121-1714 (US); TSAI, Ming-Chang, San Diego, CA 92130 (US); YE, Yan, San Diego, CA 92130 (US); LING, Fan, San Diego, CA 92129 (US); EL-MALEH, Khaled Helmi, San Diego, CA 92122 (US)
(74) Representative: Reedy, Orlaith
(86) International application number: PCT/US2005/034197
(87) International publication number: WO 2006/036802

(56) References cited:
- EP-A- 1 089 570
- WO-A-01/60011
- US-A1- 2003 014 705
- US-B1- 6 530 055
- LIANG J ET AL: "TOOLS FOR ROBUST IMAGE AND VIDEO CODING IN JPEG 2000 AND MPEG4 STANDARDS" PROCEEDINGS OF THE SPIE, SPIE, BELLINGHAM, VA, US, vol. 3653, January 1999 (1999-01), pages 40-51, XP000933619 ISSN: 0277-786X
- TALLURI R: "ERROR-RESILIENT VIDEO CODING IN THE ISO MPEG-4 STANDARD" IEEE COMMUNICATIONS MAGAZINE, IEEE SERVICE CENTER,NEW YORK, NY, US, vol. 36, no. 6, June 1998 (1998-06), pages 112-119, XP000668915 ISSN: 0163-6804
- HAGENAUER J ET AL: "Error robust multiplexing for multimedia applications - Fundamentals and Applications" SIGNAL PROCESSING. IMAGE COMMUNICATION, ELSEVIER SCIENCE PUBLISHERS, AMSTERDAM, NL, vol. 14, no. 6-8, May 1999 (1999-05), pages 585-597, XP004165397 ISSN: 0923-5965

## Description

### TECHNICAL FIELD

The disclosure relates to video decoding and, more particularly, techniques for limiting video data loss due to channel error.

### BACKGROUND

In a typical Moving Picture Experts Group (MPEG)-4 video decoder implementation, when an error is detected, the decoder conceals all macroblocks (MBs) of a corrupted slice, or an entire frame. Concealment prevents the presentation of wrongly decoded MBs in displayed video, which can be very noticeable and visually annoying. In addition, concealment prevents the use of incorrect motion vectors from wrongly decoded MBs, which could otherwise propagate additional errors into the video stream. Hence, concealing all of the MBs of a corrupted slice or frame generally provides a more visually pleasant video signal.

Although concealment techniques prevent the presentation of corrupted MBs, such techniques also purposely drop correctly received data, which can contain useful MBs at the beginning of a slice or frame. If an error actually occurs at a given MB, for example, the video decoder considers all of the MBs within the applicable slice or frame to be "possibly" corrupted and conceals them. The concealment of correctly received data is inefficient, and can significantly impact performance in some systems in which channel error is prevalent, such as wireless communication systems.

### SUMMARY

In general, the disclosure is directed to a video demultiplexing and decoding technique that includes features for efficient video data recovery in the event of channel error. A demultiplexer detects boundaries between physical layer data units and adds boundary information to adaptation layer data units produced by the demultiplexer. When a video decoder encounters an error in a video data frame, it uses the boundary information produced by the demultiplexer to limit the amount of data to be concealed. The boundary information may take the form of boundary markers embedded in the video data frame.

The boundary markers permit the error to be associated with a small segment of data within the video data frame. The segment may be identified based on the location of physical layer data units, which are typically the smallest units that are subject to loss during transmission. The video decoder uses the boundary markers to conceal a small segment of data, rather than the entire slice or frame in which the segment resides. In this manner, the video decoder provides efficient data recovery, limiting the loss of useful data that otherwise would be purposely discarded as part of the concealment process. In some cases, the decoding technique also may rely on error resilience features, such as resynchronization markers, in combination with boundary markers.

In one embodiment, the disclosure provides a video decoding method comprising generating multiplex layer data units containing video data based on physical layer data units, embedding boundary markers in the multiplex layer data units to indicate boundaries between the physical layer data units, demultiplexing the multiplex layer data units to produce a video data frame, and associating a detected decoding error with a segment of the video data frame using the boundary markers.

In another embodiment, the disclosure provides a video decoding system comprising a demultiplexing engine to generate multiplex layer data units containing video data based on physical layer data units, and demultiplex the multiplex layer data units, a boundary generator to embed boundary markers in the multiplex layer data units to indicate boundaries between the physical layer data units, and a video decoding engine to decode a video data frame containing the video data, and associate a detected decoding error with a segment of the video data frame using the boundary markers.

In an added embodiment, the disclosure provides a video demultiplexer comprising a demultiplexing engine to generate multiplex layer data units containing video data based on physical layer data units, and demultiplex the multiplex layer data units, and a boundary generator to embed boundary markers in the multiplex layer data units to indicate boundaries between the physical layer data units to permit a video decoder to associate a detected decoding error with a segment of a video data frame using the boundary markers.

In a further embodiment, the disclosure provides a wireless communication device comprising a wireless receiver to receive physical layer data units via wireless communication, the physical layer data units containing video data, a demultiplexing engine to generate multiplex layer data units based on the physical layer data units, and demultiplex the multiplex layer data units, a boundary generator to embed boundary markers in the multiplex layer data units to indicate boundaries between the physical layer data units, and a video decoding engine to decode a video data frame containing the video data, and isolate a detected decoding error to a segment of the video data frame using the boundary markers.

The details of one or more embodiments are set forth in the accompanying drawings and the description below. Other features, objects, and advantages will be apparent from the description and drawings, and from the claims.

### BRIEF DESCRIPTION OF DRAWINGS

FIG. 1 is a block diagram illustrating a video encoding and decoding system.

FIG 2 is a block diagram illustrating a video decoder system that makes use of boundary markers to identify segments of a video data frame corresponding to physical layer data units.

FIG 3 is a diagram illustrating a prior art technique for concealment of macroblocks in a video data frame upon detection of an error.

FIG. 4 is a diagram illustrating a prior art technique for concealment of macroblocks in a video data frame using resynchronization markers upon detection of an error.

FIG 5 is a diagram illustrating an exemplary prior art multiplexing and packetization technique.

FIGS. 6A-6D illustrate different techniques for concealment of macroblocks in a video data frame upon detection of an error.

FIG 7 is a diagram illustrating a demultiplexing and depacketization technique that makes use of physical data unit boundary markers embedded in a video data frame.

FIG 8 is a diagram illustrating the technique of FIG 7 when a physical data unit is lost.

FIG 9 is a diagram illustrating an alternative demultiplexing and depacketization technique that uses a boundary marker to identify a lost physical data unit within a video data frame.

FIGS. 10A-10D are diagrams illustrating various demultiplexing and depacketization techniques including a technique that uses resynchronization markers (RMs), header extension code (HEC) and boundary markers.

FIG 11 is a flow diagram illustrating a video decoding technique in accordance with this disclosure.

### DETAILED DESCRIPTION

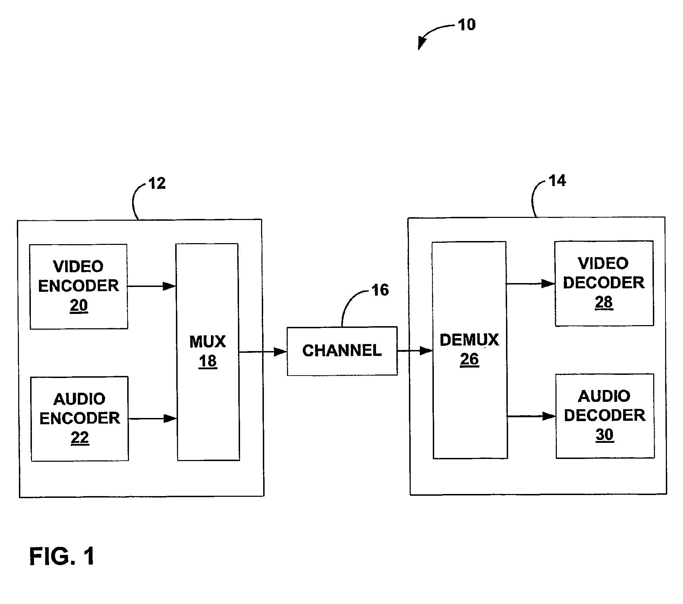

FIG. 1 is a block diagram illustrating a video encoding and decoding system 10. As shown in FIG. 1, system 10 includes an encoder system 12 and a decoder system 14 connected by a transmission channel 16. Channel 16 may be any wired or wireless medium suitable for transmission of video information. Decoder system 14 enables efficient video data recovery in the event of channel error. As will be described in detail, decoder system 14 is configured to limit the loss of useful data that ordinarily would be purposely discarded as part of the concealment process in the event of a channel error. In this manner, decoder system 14 can provide greater efficiency, enhanced decoding performance, and improved error resilient capabilities.

Encoder system 12 includes a multiplexer (MUX) 18, a video encoder 20 and an audio encoder 22. Video encoder 20 generates encoded video data according to a video compression protocol, such as MPEG-4. Other video compression protocols may be used, such as the International Telecommunication Union (ITU) H.263, ITU H.264, or MPEG-2 protocols. Audio encoder 22 encodes audio data to accompany the video data. Multiplexer 18 multiplexes the video data and audio data to form a series of multiplex data units for transmission via channel 16. As an example, multiplexer 18 may operate according to the H.223 multiplexer protocol, published by the ITU. However, other protocols may be used, such as the user datagram protocol (UDP).

Channel 16 carries the multiplexed information to decoder system 14 as physical layer data units. Channel 16 may be any physical connection between encoder system 12 and decoder system 14. For example, channel 16 may be a wired connection, such as a local or wide-area network. Alternatively, as described herein, channel 16 may be a wireless connection such as a cellular, satellite or optical connection.

Decoder system 14 includes a demultiplexer (DEMUX) 26, a video decoder 28, and an audio decoder 30. Demultiplexer 26 identifies the multiplex data units from physical layer data units and demultiplexes the content of the multiplex layer data units to produce video and audio adaptation layer data units. The adaptation layer data units are processed in the adaptation layer to produce video data frames. Video decoder 28 decodes the video data frames at the application layer to produce a stream of video data for use in driving a display device. Audio decoder 30 decodes the audio data to produce audio.

In accordance with this disclosure, demultiplexer 26 detects a boundary between the physical layer data units and adds boundary information to the bitstream produced by the demultiplexer. Demultiplexer 26 produces adaptation layer data units, which are processed by the adaptation layer to produce an application layer bitstream. When video decoder 28 encounters an error in the bitstream, it uses the boundary information to limit the amount of video data that must be concealed. In particular, video decoder 28 uses the boundary information to isolate the error to a smaller segment of data, e.g., based on the locations of physical layer data units, in this example. Video decoder 28 conceals a smaller segment of data, rather than the entire slice or frame in which the error resides.

In operation, demultiplexer 26 generates multiplex layer data units containing video and audio data based on physical layer data units received via channel 16. Demultiplexer 26 embeds one or more boundary markers in the multiplex layer data units to indicate a boundary between the physical layer data units, and demultiplexes the multiplex layer data units to produce a video data frame. Then, upon detecting a decoding error, video decoder 28 associates the detected decoding error with a segment of the video data frame using the boundary markers.

With the aid of one or more boundary markers, video decoder 28 then conceals the segment of the video data frame in which the error occurred, rather than the entire slice or frame. In some embodiments, video decoder 28 also may make use of resynchronization markers embedded in the multiplex layer data units. For example, if the video data frame includes resynchronization markers, video decoder 28 may be configured to conceal macroblocks (MBs) within a segment of the video data frame identified by the boundary markers, and MBs up to the next resynchronization marker in the video data frame.

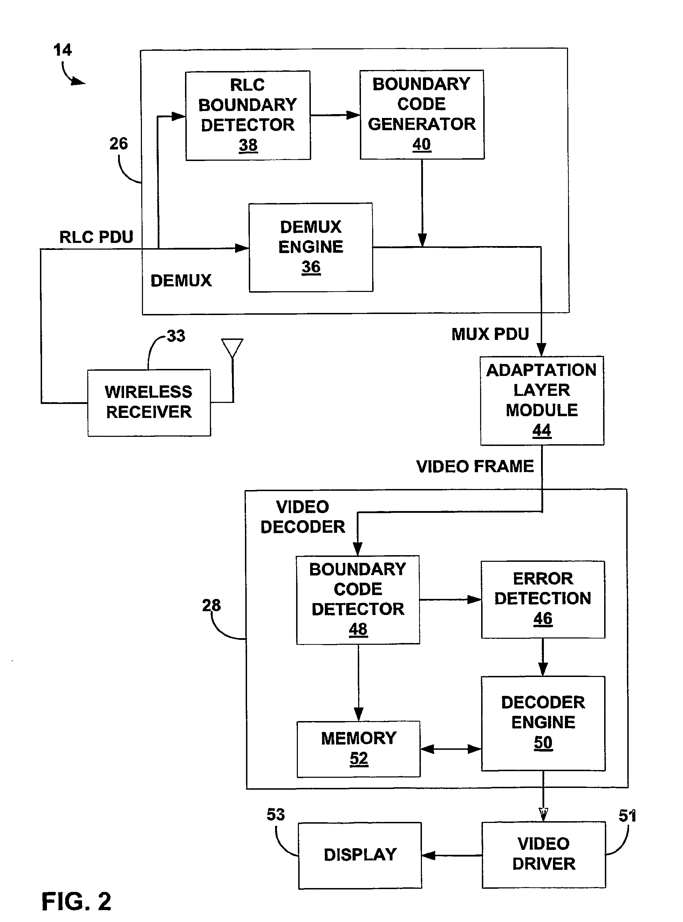

FIG 2 is a block diagram illustrating an embodiment of a video decoder system 14 that makes use of boundary markers to identify segments of a video data frame corresponding to physical layer data units. Video decoder system 14 makes use of one or more video boundary markers to limit the amount of data that is concealed in the event of a decoding error. In the example of FIG 2, video decoder system 14 includes a wireless receiver 33 to receive video and audio data over a wireless channel. Wireless receiver 33 may be configured to receive radio frequency (RF) wireless signals according to any of a variety of wireless transmission techniques such as Code Division Multiple Access (CDMA), wideband CDMA (W-CDMA), or Time Division Multiple Addressing (TDMA).

As shown in FIG. 2, demultiplexer (DEMUX) 26 includes a demultiplexing engine 36, a radio link control (RLC) boundary detector 38, and a boundary code generator 40. Demultiplexing engine 36 generates multiplex layer data units containing video and audio data based on physical layer data units received from wireless receiver 33. In some embodiments, the physical layer data units may be W-CDMA radio link control (RLC) packet data units (PDUs), i.e., RLC PDUs. Alternatively, the physical layer data units may take a variety of different forms, such as CDMA2000 1x RLP (Radio Link Protocol) PDUs, CDMA2000 1x EV-DO RLP PDUs, CDMA2000 EV-DV RLP PDUs. Demultiplexing engine 36 generates multiplex layer packet data units (MUX PDUs) according to a demultiplexing protocol, such as H.223. However, the techniques described herein may be applicable to other video transport protocols, such as SIP-based and H.323 video telephony protocols using RTP/LTDP/IP (Real-time Transport Protocol/User Datagram Protocol/Internet Protocol).

RLC boundary detector 38 detects boundaries between the RLC PDUs. Boundary code generator 40 generates a code for each boundary, and embeds the code as a boundary marker at an appropriate location within the multiplex layer data units produced by demultiplexing engine 36. In this manner, demultiplexer 26 preserves an indication of the boundaries between the physical layer data units. When demultiplexing engine 36 produces a MUX PDU, and the adaptation layer module 44 produces a video data frame, the boundary markers remain intact for use by video decoder engine 28 in isolating decoding errors to small segments of the video data frame.

For MPEG-4 wireless transmissions using W-CDMA, an RLC PDU is the smallest unit that is subject to losses during transmission. For example, a W-CDMA RLC-PDU is 160-bytes long for every 20 ms. With the aid of boundary markers, video decoder 28 can associate a detected decoding error with a small segment of the video data frame produced by demultiplexer 26. Upon detection of the decoding error, video decoder 28 conceals the small segment of the video data frame rather than an excessive number of MBs, or even the entire video data frame in some instances.

As further shown in FIG. 2, an adaptation layer module 44 converts the MUX PDUs produced by demultiplexer engine 36 into a video data frame for processing by video decoder 28. In this example, video decoder 28 includes an error detection module 46, a boundary code detector 48, a decoder engine 50 and memory 52. Boundary code detector 48 scans the incoming video frame bitstream to detect boundary markers, which indicate the boundaries between RLC PDUs in the original transmission at the physical layer. Boundary code detector 48 removes the boundary markers from the video frame bitstream, and records the locations of the boundary markers in memory 52. When error detection module 46 detects a decoding error, decoder engine 50 makes use of the recorded boundary maker locations to determine the position of the error in terms of the boundaries between RLC PDUs in the original transmission at the physical layer. Decoder engine 50 records the locations in memory 52 so that the size of the segment of concealed MBs can be limited, generally to the size of the RLC PDUs.

Hence, decoder system 14 provides a unique transport-decoder cross-layer design that promotes efficient video data recovery. Decoder system 14 limits the amount of useful data that must be discarded in the presence of a transmission error. According to this cross-layer design, transport layers pass additional information to video decoder engine 50 in order to recover those data that were correctly received before the channel impairments.

As further shown in FIG. 2, video decoder 50 produces a decoded video bitstream, and delivers it to a video driver 51. Video driver 51 drives a display device 53 to present video imagery to a user. Video decoder system 14 may support a variety of video applications, including delivery of streaming video or video telephony. In each case, decoder system 14 is effective in limiting the loss of useful data, and thereby enhancing efficiency and performance.

Video decoder system 14 may be implemented as a decoding process, or coding/decoding (CODEC) process, running on a digital signal processor (DSP) or other processing device. Video decoder system 14 may have a dedicated memory 52 for storing instructions and data, as well as dedicated hardware, software, firmware, or combinations thereof. Various aspects of the techniques described herein may be implemented in hardware, software, firmware, or any combination thereof. If implemented in software, the techniques may be embodied as instructions on a computer-readable medium such as random access memory (RAM), read-only memory (ROM), non-volatile random access memory (NVRAM), electrically erasable programmable read-only memory (EEPROM), FLASH memory, or the like. The instructions cause one or more processors to perform certain aspects of the functionality described in this disclosure.

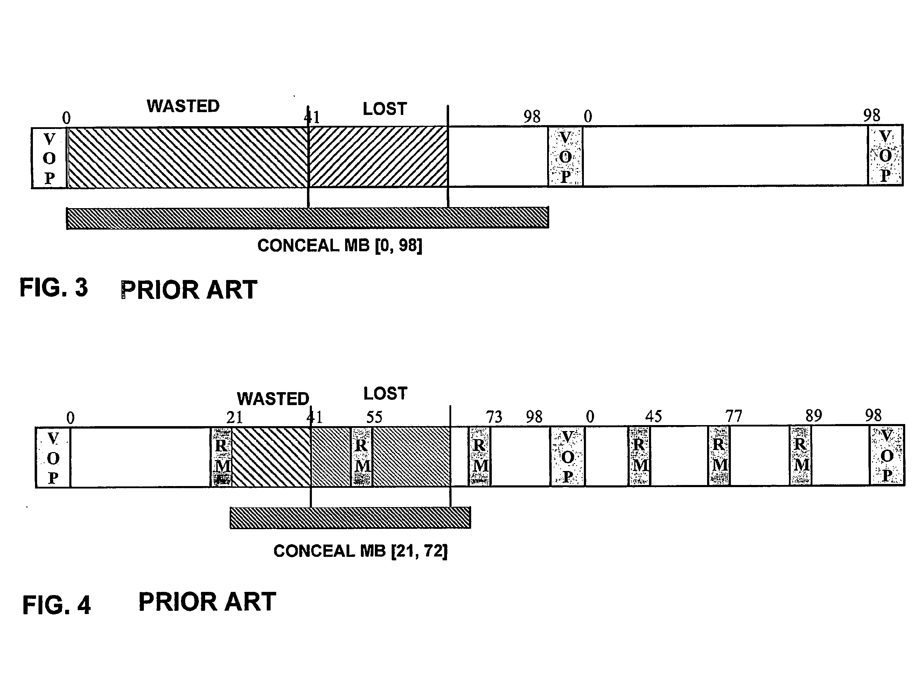

FIG 3 is a diagram illustrating concealment of MBs in a video data frame upon detection of an error according to a prior art technique. FIG 3 is provided for purposes of comparison to better illustrate the techniques described in this disclosure. As shown in FIG 3, in a typical prior art concealment process, when an error is detected due to loss of MBs during transmission, a decoder conceals all MBs of a corrupted slice, or an entire frame. Although this approach prevents the presentation of corrupted MBs, it also purposely drops correctly received data, which can contain tens of MBs at the beginning of a slice or frame prior to the position of an error.

The diagram in FIG. 3 illustrates the general inefficiency of concealing useful data. FIG. 3 identifies respective MBs by sequence numbers within a video data frame extending from MB 0 to MB 98. Successive video data frames are bounded by video object plane (VOP) fields that signify the end of a video data field. In the example of FIG. 3, an error actually occurs at MB 41, but the video decoder considers the MBs from 0 to 98 as being "possibly" corrupted and conceals all of them. This is equivalent to dropping the data from MB 0 to MB 40. Consequently, MBs following the error are "LOST," while correctly received MBs before the error are "WASTED." Clearly, the MBs 0 to 40 do not include errors, and instead carry useful data. Yet, the prior art concealment techniques result in concealment of all MBs 0 to 98, i.e., the entire video data frame.

FIG. 4 is a diagram illustrating concealment of MBs in a video data frame using resynchronization markers upon detection of an error according to another prior art technique. In the example of FIG 4, resynchronization makers (RMs) are embedded in the data frame to support error resilience techniques. The use of RMs improves the efficiency of the decoding process in the presence of errors, but still results in wasted MBs. In the example of FIG 4, when RMs are used, the video decoder can only recover data from MB 0 to MB 20, and still must conceal correctly received MBs from 21 to 40, which results in a loss of 20 MBs. Although the error occurs at MB 41 in the example of FIG 4, this technique requires concealment of MBs between the last RM immediately preceding the error and the first RM immediately following the error, as illustrated in FIG 4. Hence, the use of resynchronization markers in this manner provides a significant improvement in efficiency, but still results in a significant number of wasted MBs.

In contrast to the techniques depicted in FIGS. 3 and 4, the use of one or more boundary markers, as described in this disclosure, supports the recovery of correctly decoded MBs positioned prior to an error, but still adequately prevents the presentation of wrongly decoded MBs. The demultiplexing layer, e.g., H.223, passes video-RLC boundary information to the decoder by embedding one or more boundary markers in the bitstream, e.g., as a special codeword. Video decoder 28 interprets the codeword as a boundary marker that permits identification of all possible locations of data losses in terms of the physical data units received via channel 16. With more exact locations of data losses, video decoder 28 can use such information to associate the errors with smaller segments of the video data frame and recover more of the correctly received MBs.

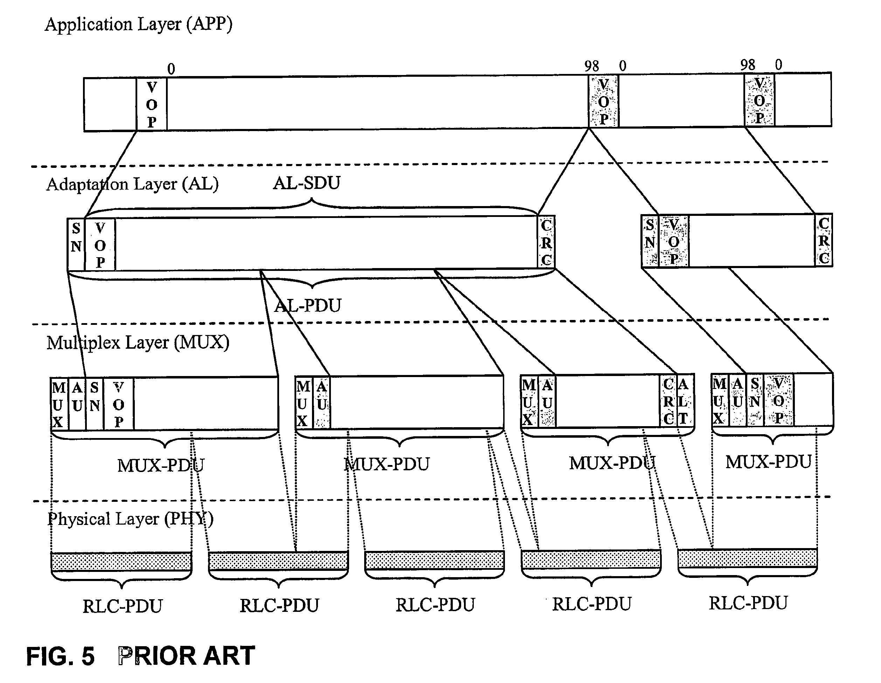

FIG. 5 is a diagram illustrating a prior art multiplexing and packetization technique within an encoder, such as encoder 12 of FIG 1. The process will be described in the context of the H.223 multiplexing protocol for purposes of illustration. In the example of FIG 5, video data is packetized into H.223 packets and multiplexed with audio data. The video bitstream at the application layer (APP) is first chopped into one or more application layer service data units (AL-SDUs). One AL-SDU can contain one whole frame or just a slice of a frame, depending on the video encoder implementation. Each AL-SDU is then passed to the H.223 Adaptation Layer (AL), where an AL-PDU packet is formed by adding an optional Sequence Number (SN) at the front, and a 16-bit cyclic redundancy code (CRC) to the end.

Each video AL-PDU is sent to the H.223 Multiplex Layer (ML) to be fragmented, if necessary, and multiplexed with audio (AU) AL-PDUs into MUX-PDUs by inserting framing information and a MUX header. The last MUX-PDU of a video AL-PDU is tailed with additional framing information (ALT) to indicate the termination of this video AL-PDU. All the MUX-PDUs are carried by physical layer data units. In a wireless application, the physical layer data units are radio link packets, such as W-CDMA RLC PDUs as shown in FIG 5.

At a decoder, such as decoder system 14 of FIG 1, the H.223 demultiplexer receives the RLC-PDUs and locates each MUX-PDU by searching the MUX framing information. The demultiplexer extracts the video and audio data from the MUX-PDU payload according to a MUX table in the MUX header. Once the terminating framing information is found, the demultiplexer de-fragments all of the video data extracted from different MUX-PDUs, but belonging to the same video AL-PDU, and passes the de-fragmented video data to the AL for integrity checking using CRC. If CRC succeeds, the video decoder receives the entire AL-SDU. If CRC fails, the corrupted AL-SDU may be passed to the video decoder or discarded, depending on the implementation.

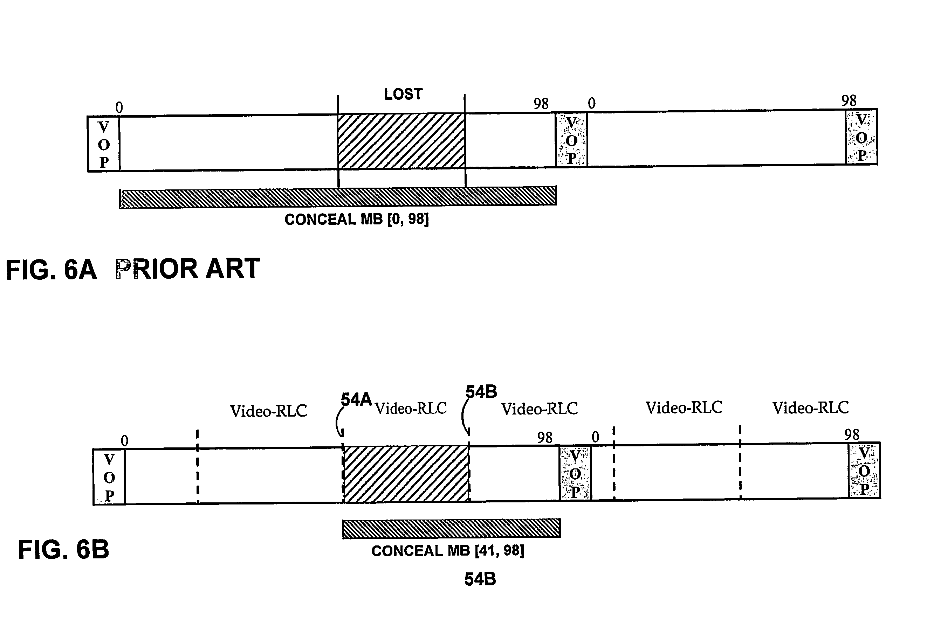

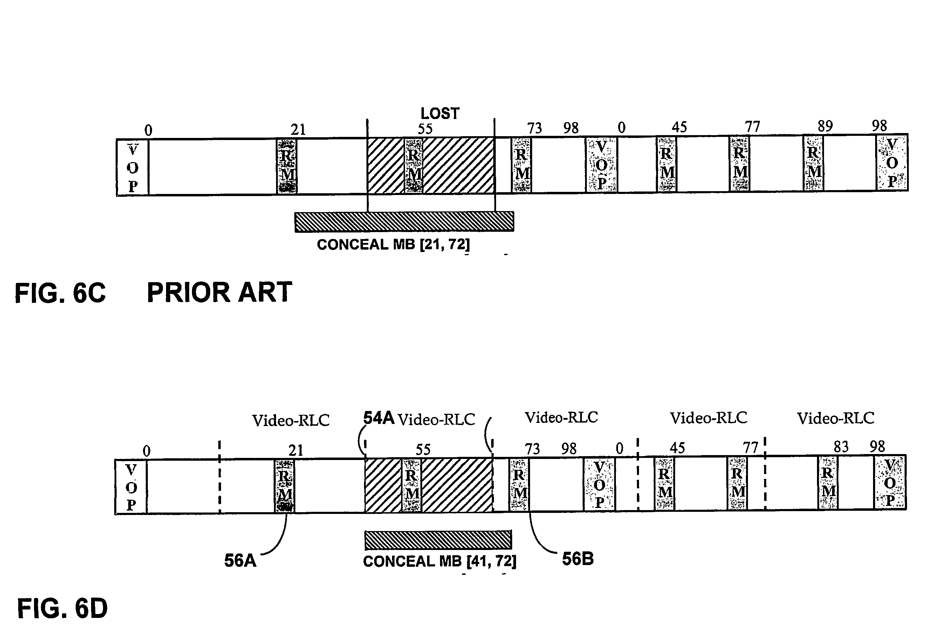

FIGS. 6A-6D illustrate different techniques for concealment of macroblocks in a video data frame upon detection of an error. In particular, FIGS. 6A-6D show video data frames in conjunction with different concealment techniques. FIGS. 6A and 6C depict prior art techniques that do not employ boundary markers. FIGS. 6B and 6D depict the use of boundary markers, as described in this disclosure.

FIG 6A depicts the use of a prior art technique in which no error resilience techniques are used. According to the technique of FIG 6A, when an error is detected at MB 41, the entire video data frame, including macroblocks MB [0, 98], is concealed. FIG 6B illustrates the use of boundary markers 54, in accordance with this disclosure, to associate errors with smaller segments of a video data frame.

In FIG 6B, a video data frame includes boundary markers 54 that indicate the boundaries between the video portions of adjacent physical layer data units, such as W-CDMA RLC PDUs. In particular, the boundary markers 54 define segments referred to herein as "Video-RLC" units. One Video-RLC unit is indicated, for example, by boundary markers 54A, 54B. A Video-RLC unit generally corresponds to an RLC PDU, which is the smallest unit in which a loss can occur. In the event of channel error, the RLC PDU can be used as a guide to prevent the concealment of useful information.

The use of boundary markers 54 allows errors to be associated with a single Video-RLC unit. In the event an error is detected by video decoder engine 50, correctly received MBs that are positioned prior to the Video-RLC unit in which the error occurred can be preserved. In particular, this technique permits recovery of correctly received MBs positioned prior to boundary marker 54A.

Preservation of the correctly received MBs using the technique of FIG 6B can result in increased efficiency and improved performance, relative to the technique of FIG 6A. In the example of FIG. 6B, if an error is detected at MB 41, MBs [41,98] through the end of the video data frame are concealed. However, MBs [0,40] occurring prior to MB 41 need not be concealed. Boundary marker 54A serves to indicate the start of the Video-RLC unit in which the error was detected. Hence, video decoder engine 50 relies on boundary marker 54A in determining which MBs to conceal.

FIG. 6C depicts the use of an error resilience technique that employs resynchronization markers (RMs). In FIG 6C, when an error is detected at MB 41, only MBs [21, 72] between a preceding RM and a subsequent RM are concealed, thereby conserving MB [0, 20] and MB [73,98]. FIG. 6D illustrates the use of boundary markers 54 in combination with RMs 56 for error resilience. In the example of FIG. 6D, when an error occurs at MB 41, MBs [41, 72] are concealed from the beginning of the Video-RLC unit to the next occurring RM 56B.

The boundary marker technique of FIG. 6D represents an improvement over the basic error resilience technique shown in FIG. 6C. Specifically, MBs are preserved between the preceding RM 56A and the boundary marker 54A denoting the start of the Video-RLC unit in which the error was detected, providing advantages over the conventional use of RMs. At the same time, however, MBs are preserved between the following RM 56B and the end of the frame. Hence, the combined use of boundary markers 54 and RMs 56 according to the technique of FIG. 6D results in further efficiencies relative to the technique of FIG. 6C.

A variety of different techniques may be used to provide boundary markers 54. As one example, demultiplexing engine 36 may store the memory address of each RLC boundary in memory 52. However, the stored information may be lost when the memory content is copied to the decoding buffer used by video decoder 28. In addition, it can be difficult to convert recorded memory addresses to the addresses in the decoding buffer. Therefore, as an alternative, another approach is to embed the boundary markers in a video data frame, as described herein. In particular, according to this approach, demultiplexer 26 detects the boundaries from the physical layer data units, and embeds boundary markers, which are then passed up through the multiplexing and adaptation layers to the application layer for use by video decoder engine.

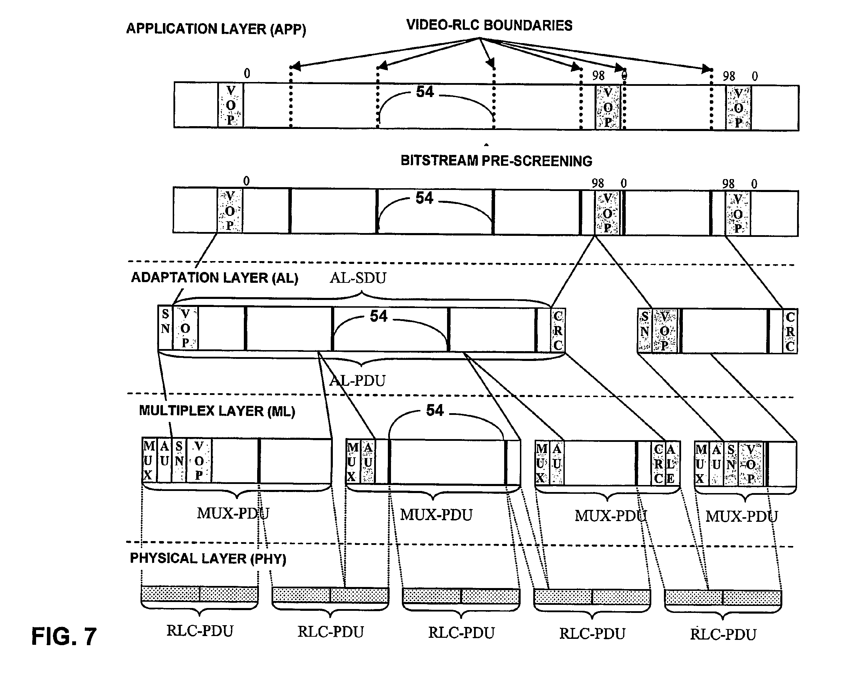

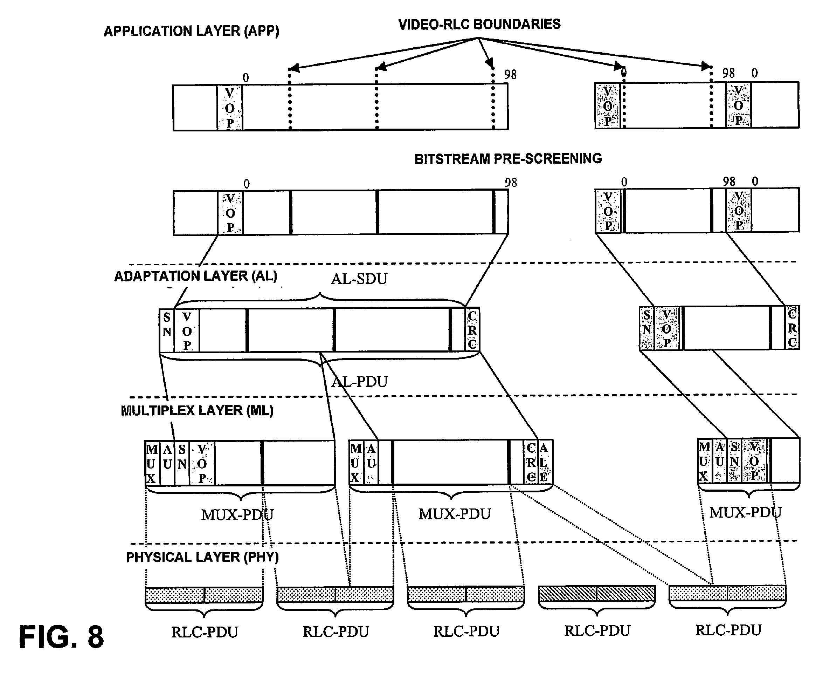

FIG 7 is a diagram illustrating a demultiplexing and depacketization technique that involves embedding boundary markers in a video data frame, in accordance with this disclosure. FIG 8 is a diagram illustrating the technique of FIG 7 when a physical data unit, such as an RLC-PDU, is lost. The functions shown in FIGS. 7 and 8 may be performed by a video decoder system 14 as described with reference to FIG. 2. As shown in FIG 7, demultiplexing engine 26 receives RLC PDU's at the physical layer and converts them to MUX PDUs at the multiplex layer (ML). In the decoder implementation of FIG 2, for example, video-RLC boundary detector 38 detects the boundaries between the RLC PDUs, and boundary code generator 40 embeds boundary markers 54 in the MUX PDUs.

Demultiplexing engine 36 generates adaptation layer (AL) PDUs, which are then converted to AL SDUs. In this manner, the video data is serialized into a video data frame for bitstream pre-processing followed by video decoding at the application layer (APP). At the multiplexer and adaptation layers, the boundary markers 54 that signify the RLC boundaries remain intact for later reference by video decoder engine 5 0. In effect, the multiplex layer keeps track of each RLC-PDU fetched from the physical layer and inserts a special codeword, i.e., a boundary marker, when RLC-PDUs are concatenated. If an RLC-PDU is lost, as shown in FIG 8, the video decoder is still able to recover correctly received data by tracing back to the MB where the nearest boundary lays, instead of dropping the data of the corrupted slice or frame. In this way, video decoder engine 50 can use the boundary markers 54 to associate detected errors with smaller segments within the video data frame, conforming to the original physical layer data units, and thereby avoid excessive and unnecessary concealment of MBs in the video data frame. Video decoder engine 50 may detect an error when an RLC-PDU is corrupted or lost in its entirety.

The boundary markers may be embedded as a special codeword when an RLC-PDU is fetched by the MUX layer. Again, this boundary information can be passed up all the way to the application layer as boundary markers for use by video decoder 28 (FIG. 2). With reference to FIG. 2, boundary code detector 48 performs the bitstream pre-screening process to seek these boundary markers, which serve as special codewords. Boundary code detector 48 records the positions of the boundary markers in memory 52, and removes the boundary markers from the bitstream before decoding by decoder engine 50. During decoding, once an RLC boundary is crossed, decoder engine 50 can record which MB is being decoded, by reference to the locations stored in memory 52. Once an error is detected by error detection module 46, decoder engine 50 will conceal MBs extending from the MB it has recorded to the end of the frame, or to the next resynchronization marker (RM) codeword, in the event error resilience techniques are also employed in combination with RLC boundary markers. The characteristics of the particular special codeword used as a boundary marker may be subject to different implementations. However, the codeword should be readily distinguishable from existing bit patterns used in the bitstream produced by any video compression standards such as MPEG-4 and H.263 bitstreams. In some cases, the special codeword may be implemented using the reserved start code defined in the MPEG-4 and H.263 standards.

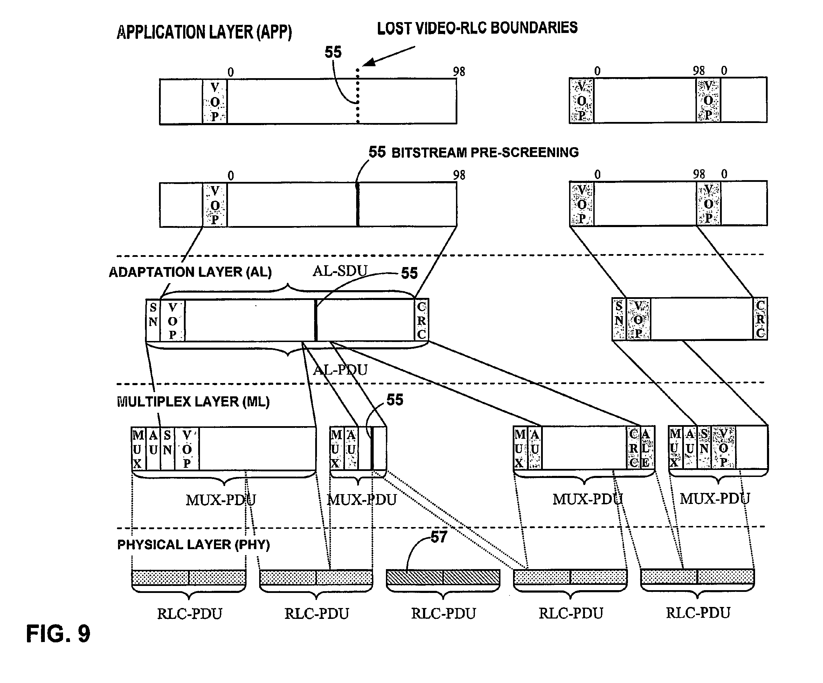

FIG 9 is a diagram illustrating an alternative demultiplexing and depacketization technique, in accordance with this disclosure, that uses a boundary marker to identify a lost physical data unit within a video data frame. In the example of FIG 9, demultiplexer 26 embeds an RLC boundary marker 55 to indicate a lost RLC-PDU 57 at the physical layer. In this case, the physical layer is configured to indicate to the multiplex layer which RLC-PDU is lost. Hence, demultiplexer 26 provides video decoder 28 with an advance warning when an RLC-PDU has been lost. This approach is in contrast to providing boundary markers for all RLC-PDUs, and having the video decoder engine 50 resolve errors or lost RLC-PDUs during decoding. If the physical layer is configured to identify a lost RLC-PDU to provide such information, then the demultiplexer 26 embeds a marker as a special codeword within the MUX-PDU in which the lost RLC-PDU occurred. Video decoder engine 50 then seeks this special codeword within memory 52 to locate the lost video-RLC boundary, and conceals macroblocks from that point to the end of the frame, or the next RM if error resilience techniques are employed. In this manner, the correctly received MBs up to the point of the lost RLC-PDU can be recovered and preserved, rather than concealed and wasted.

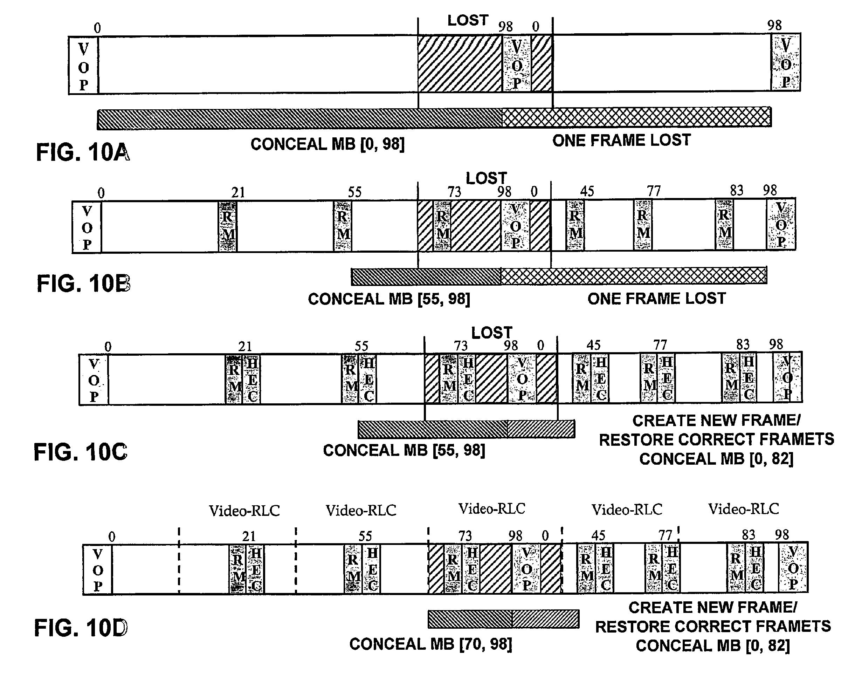

FIGS. 10A-10D are diagrams illustrating various demultiplexing and depacketization techniques including a technique that uses resynchronization markers (RMs), header extension code (HEC) and boundary markers in FIG 10D. For ease of illustration, each diagram in FIGS. 10A-10D includes vertical lines to indicate the position of boundary markers defining Video-RLC units, although only FIG 10D actually illustrates the use of Video-RLC boundary markers. In the example of FIG 10A, no error resilience tools are used. As a result, when an error is detected at the end of a first video data frame and the beginning of a second video data frame, the MBs [0, 98] for the entire second frame are lost, while the MBs [0, 98] for substantially the entire first video data frame must be concealed up to the point of the error. Consequently, the scenario depicted in FIG 10A can result in a drastic adverse impact on video decoding performance.

In the example of FIG. 10B, RMs are embedded in the video data frame, in accordance with prior art error resilience techniques. As shown in FIG. 10B, when an error is detected at the end of a first video data frame and the beginning of second video data frame, as in FIG. 10A, the RMs permit a significant reduction in the number of concealed MBs in the first video data frame. Although the MBs [0,98] in the entire second video data frame are lost, and MBs extending from the error to the end of the first video data frame are concealed, the MBs in the first video data frame up to the point of the RM [55,98] immediately preceding the error are recovered, rather than concealed. Hence, the use of error resilience techniques can provide a substantial performance improvement.

In the example of FIG. 10C, RMs and HEC bits are embedded in the video data frames. In this scenario, MBs can be recovered up to the point of the RM immediately preceding the error. MBs [55,98] are concealed between the RM immediately preceding the error and the end of the first video data frame. In these respects, the scenario of FIG. 10C generally conforms to the scenario of FIG 10B. However, the presence of the HEC bits prevents the loss of the entire second video data frame. Rather, as shown in FIG 10C, MBs at the start of the second video data frame [0, 45], while MBs following the first HEC field in the second video data frame are recovered. In particular, at the start of the HEC field in the second video data frame, a new frame is created. The MBs [0, 44] in the new frame need to be concealed but the MBs [45, 98] can be decoded.

In the example of FIG. 10D, decoder system 14 employs advanced error resilient tools, such as RMs and HEC fields, in combination with Video-RLC boundary markers in accordance with this disclosure to further reduce the impact of data losses and the number of dropped and concealed MBs. FIG 10D generally conforms to FIG 10C. However, the presence of boundary markers permits additional MBs to be recovered prior to the point of error detection. In particular, as shown in FIG. 10D, MBs are recovered up to the point of the boundary marker at the start of the segment in which the error occurred, such that only MBs [70, 98] must be concealed in the first video data field.

The presence of the boundary markers in the video data frames of FIG 10D permits the error to be associated with a smaller segment of the video data field. The error segment is significantly smaller than the range between RMs, and actually corresponds to a physical layer data unit, which is the smallest unit in which a loss can occur during transmission. As is apparent from FIG. 10D, the addition of boundary markers results in a significant savings in the recovery of MBs, when compared with the use of RMs and HEC fields alone.

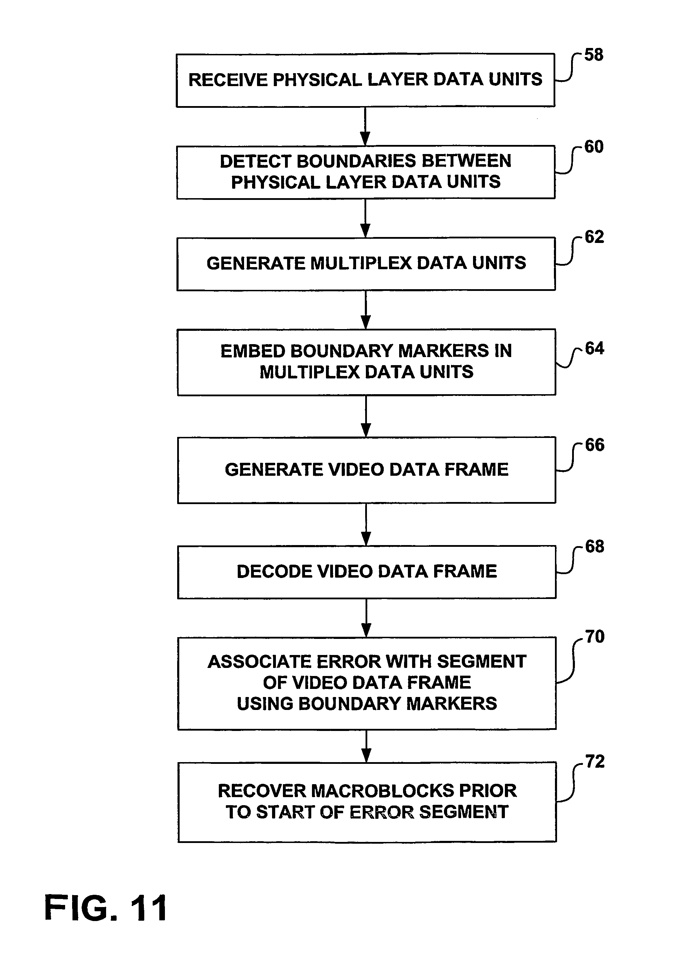

FIG 11 is a flow diagram illustrating a video decoding technique in accordance with this disclosure. As shown in FIG 10, the technique involves receiving physical layer data units containing video and audio information (58), and detecting the boundaries between adjacent physical layer data units (60). In an example wireless application, the physical layer data units may be W-CDMA RLC-PDUs. Upon generation of multiplex layer data units (62), the technique further involves embedding one or more boundary markers in the multiplex layer data units to identify the physical data unit boundaries (64).

Upon generating a video data frame (66), a video decoder decodes the video data frame (68) and associates any error with a smaller segment of the video data frame using the embedded boundary markers (70). In this manner, MBs positioned prior to the segment in which the error is detected, i.e., prior to the boundary marker signifying the start of the error segment, can be recovered (72), rather than concealed. In addition, if resynchronization markers (RMs) are used, MBs following the next RM occurring after the end of the error segment can be recovered through the end of the applicable frame. The next RM following the error segment can be identified by reference to the boundary marker signifying the end of the segment in which the error was detected.

Various embodiments have been described. These and other embodiments are within the scope of the following claims.

## Claims

1. A video decoding method comprising:
generating multiplex layer data units containing video data based on physical layer data units;
embedding a boundary marker in the multiplex layer data units to indicate a boundary between the physical layer data units;
demultiplexing the multiplex layer data units to generate a video data frame; and
associating a detected decoding error with a segment of the video data frame using the boundary markers.

2. The method of claim 1, wherein the boundary marker identifies a start of a lost physical layer data unit.

3. The method of claim 1, wherein embedding a boundary marker includes embedding a plurality of the boundary markers to identify boundaries between a plurality of the physical layer data units.

4. The method of claim 1, wherein the video data frame includes macroblocks of video data, the method further comprising concealing macroblocks within the segment of the video data frame.

5. The method of claim 1, wherein the video data frame includes resynchronization markers, the method further comprising concealing macroblocks within the segment of the video data frame and macroblocks up to a next one of the resynchronization markers following the detected decoding error in the video data frame.

6. The method of claim 1, further comprising demultiplexing the multiplex layer data units to generate adaptation layer data units, and generating the video data frame based on the adaptation layer data units.

7. The method of claim 1, further comprising receiving the physical layer data units via wireless communication.

8. The method of claim 1, further comprising demultiplexing the multiplex layer units according to the ITU H.223 multiplexing/demultiplexing protocol.

9. The method of claim 1, further comprising demultiplexing the multiplex layer units according to the RTP/UDP/IP multiplexing/demultiplexing protocol.

10. The method of claim 1, wherein the video data frame includes macroblocks of video data conforming to the MPEG-4 standard.

11. The method of claim 1, wherein the video data frame includes macroblocks of video data conforming to one of the ITU H.263, ITU H.264 and MPEG-2 protocols.

12. The method of claim 1, wherein the physical layer data units include W-CDMA radio link control packet data units (RLC PDUs).

13. The method of claim 12, wherein the multiplex layer data units conform to the H.223 multiplexing/demultiplexing protocol.

14. The method of claim 1, wherein the physical layer data units include CDMA2000 1x radio link protocol packet data units (RLP PDUs), CDMA2000 1x EV-DO RLP PDUs, or CDMA2000 EV-DV RLP PDUs.

15. The method of claim 1, wherein the multiplex layer data units conform to the RTP/UDP/IP multiplexing/demultiplexing protocol.

16. The method of claim 1, wherein the physical layer data units include audio and video data, and embedding boundary markers includes embedding boundary markers in the multiplex layer data units to indicate boundaries between video information in the physical layer data units.

17. A video decoding system comprising:
a demultiplexing engine to generate multiplex layer data units containing video data based on physical layer data units, and demultiplex the multiplex layer data units;
a boundary generator to embed a boundary marker in the multiplex layer data units to indicate a boundary between the physical layer data units; and
a video decoding engine to decode a video data frame containing the video data, and associate a detected decoding error with a segment of the video data frame using the boundary markers.

18. The system of claim 17, wherein the boundary marker identifies a start of a lost physical layer data unit.

19. The system of claim 17, wherein the boundary generator embeds a plurality of the boundary markers to identify boundaries between a plurality of the physical layer data units.

20. The system of claim 17, further comprising a boundary detector to detect the boundaries between the physical layer data units.

21. The system of claim 17, wherein the video data frame includes macroblocks of video data, and the decoding engine conceals macroblocks within the segment of the video data frame.

22. The system of claim 17, wherein the video data frame includes resyncrhonization markers, and the decoding engine conceals macroblocks within the segment of the video data frame and macroblocks up to a next one of the resynchronization markers following the detected decoding error in the video data frame.

23. The system of claim 17, further comprising an adaptation layer module to generate adaptation layer data units based on the demultiplexed multiplex layer data units, and generate the video data frame based on the adaptation layer data units.

24. The system of claim 17, further comprising a wireless receiver to receive the physical layer data units via wireless communication.

25. The system of claim 17, wherein the demultiplexing engine demultiplexes the multiplex layer units according to the ITU H.223 multiplexing/demultiplexing protocol.

26. The system of claim 17, wherein the demultiplexing engine demultiplexes the multiplex layer units according to the RTP/UDP/IP multiplexing/demultiplexing protocol.

27. The system of claim 17, wherein the video data frame includes macroblocks of video data conforming to the MPEG-4 standard.

28. The system of claim 17, wherein the video data frame includes macroblocks of video data conforming to one of the ITU H.263, ITU H.264 and MPEG-2 protocols

29. The system of claim 17, wherein the physical layer data units include W-CDMA radio link control packet data units (RLC PDUs).

30. The system of claim 29, wherein the multiplex layer data units conform to the H.223 multiplexing/demultiplexing protocol.

31. The system of claim 17, wherein the physical layer data units include CDMA2000 1x radio link protocol packet data units (RLP PDUs), CDMA2000 1x EV-DO RLP PDUs, or CDMA2000 EV-DV RLP PDUs.

32. The system of claim 17, wherein the multiplex layer data units conform to the RTP/UDP/IP multiplexing/demultiplexing protocol.

33. The system of claim 17, wherein the physical layer data units include audio and video data, and the boundary generator embeds the boundary markers in the multiplex layer data units to indicate boundaries between video information in the physical layer data units.

34. A video demultiplexer comprising:
a demultiplexing engine to generate multiplex layer data units containing video data based on physical layer data units, and demultiplex the multiplex layer data units; and
a boundary generator to embed a boundary marker in the multiplex layer data units to indicate a boundary between the physical layer data units to permit a video decoder to associate a detected decoding error with a segment of a video data frame using the boundary markers.

35. The demultiplexer of claim 34, wherein the boundary marker identifies a start of a lost physical layer data unit.

36. The demultiplexer of claim 34, wherein the boundary generator embeds a plurality of the boundary markers to identify boundaries between a plurality of the physical layer data units.

37. The demultiplexer of claim 34, further comprising a boundary detector to detect the boundaries between the physical layer data units.

38. The demultiplexer of claim 34, wherein the video data frame includes macroblocks of video data, and the decoding engine conceals macroblocks within the segment of the video data frame.

39. The demultiplexer of claim 34, wherein the demultiplexing engine demultiplexes the multiplex layer data units according to the H.223 multiplexing/demultiplexing protocol.

40. The demultiplexer of claim 34, wherein the demultiplexing engine demultiplexes the multiplex layer data units according to the RTP/UDP/IP multiplexing/demultiplexing protocol.

41. The demultiplexer of claim 34, wherein the video data frame includes macroblocks of video data conforming to the MPEG-4 standard.

42. The demultiplexer of claim 34, wherein the video data frame includes macroblocks of video data conforming to one of the ITU H.263, ITU H.264 and MPEG-2 protocols

43. The demultiplexer of claim 34, wherein the physical layer data units include W-CDMA radio link control packet data units (RLC PDUs).

44. The demultiplexer of claim 43, wherein the multiplex layer data units conform to the H.223 multiplexing/demultiplexing protocol.

45. The demultiplexer of claim 34, wherein the physical layer data units include CDMA2000 1x radio link protocol packet data units (RLP PDUs), CDMA2000 1x EV-DO RLP PDUs, or CDMA2000 EV-DV RLP PDUs.

46. The demultiplexer of claim 34, wherein the multiplex layer data units conform to the RTP/UDP/IP multiplexing/demultiplexing protocol.

47. The demultiplexer of claim 34, wherein the physical layer data units include audio and video data, and the boundary generator embeds the boundary markers in the multiplex layer data units to indicate boundaries between video information in the physical layer data units.

48. A wireless communication device comprising:
a wireless receiver to receive physical layer data units via wireless communication, the physical layer data units containing video data;
a demultiplexing engine to generate multiplex layer data units based on the physical layer data units, and demultiplex the multiplex layer data units;
a boundary generator to embed a boundary marker in the multiplex layer data units to indicate a boundary between the physical layer data units; and
a video decoding engine to decode a video data frame containing the video data, and associate a detected decoding error with a segment of the video data frame using the boundary markers.

49. The device of claim 48, wherein the boundary marker identifies a start of a lost physical layer data unit.

50. The device of claim 48, wherein the boundary generator embeds a plurality of the boundary markers to identify boundaries between a plurality of the physical layer data units.

51. A video decoding system comprising:
means for generating multiplex layer data units containing video data based on physical layer data units;
means for embedding a boundary marker in the multiplex layer data units to indicate a boundary between the physical layer data units;
means for demultiplexing the multiplex layer data units to generate a video data frame; and
means for associating a detected decoding error with a segment of the video data frame using the boundary markers.

52. The system of claim 51, wherein the boundary marker identifies a start of a lost physical layer data unit.

53. The system of claim 51, wherein the embedding means includes means for embedding a plurality of the boundary markers to identify boundaries between a plurality of the physical layer data units.

54. The system of claim 51, wherein the video data frame includes macroblocks of video data, the system further comprising means for concealing macroblocks within the segment of the video data frame.

55. The system of claim 51, wherein the video data frame includes resynchronization markers, the system further comprising means for concealing macroblocks within the segment of the video data frame and macroblocks up to a next one of the resynchronization markers following the detected decoding error in the video data frame.

56. The system of claim 51, wherein the demultiplexing means demultiplexes the multiplex layer units according to the ITU H.223 or RTP/UDP/IP multiplexing/demultiplexing protocols.

57. The system of claim 51, wherein the video data frame includes macroblocks of video data conforming to the MPEG-4, ITU H.263, ITU H.264 or MPEG-2 protocols.

58. The system of claim 51, wherein the physical layer data units include W-CDMA radio link control packet data units (RLC PDUs), CDMA2000 1x radio link protocol packet data units (RLP PDUs), CDMA2000 1x EV-DO RLP PDUs, or CDMA2000 EV-DV RLP PDUs.

59. A computer-readable medium comprising instructions to cause one or more processors to:
generate multiplex layer data units containing video data based on physical layer data units;
embed a boundary marker in the multiplex layer data units to indicate a boundary between the physical layer data units;
demultiplex the multiplex layer data units to generate a video data frame; and
associate a detected decoding error with a segment of the video data frame using the boundary markers.

60. The computer-readable medium of claim 59, wherein the boundary marker identifies a start of a lost physical layer data unit.

61. The computer-readable medium of claim 59, further comprising instructions to cause the processor to embed a plurality of the boundary markers to identify boundaries between a plurality of the physical layer data units.

62. The computer-readable medium of claim 59, wherein the video data frame includes macroblocks of video data, further comprising instructions to cause the processor to conceal macroblocks within the segment of the video data frame.

63. The computer-readable medium of claim 59, wherein the video data frame includes resynchronization markers, further comprising instructions to cause the processor to conceal macroblocks within the segment of the video data frame and macroblocks up to a next one of the resynchronization markers following the detected decoding error in the video data frame.

64. The computer-readable medium of claim 59, wherein the instructions cause the processor to demultiplex the multiplex layer units according to the ITU H.223 or RTP/UDP/IP multiplexing/demultiplexing protocol.

65. The computer-readable medium of claim 59, wherein the video data frame includes macroblocks of video data conforming to the MPEG-4, ITU H.263, ITU H.264 or MPEG-2 protocols.

66. The computer-readable medium of claim 59, wherein the physical layer data units include W-CDMA radio link control packet data units (RLC PDUs), CDMA2000 1x radio link protocol packet data units (RLP PDUs), CDMA2000 1x EV-DO RLP PDUs, or CDMA2000 EV-DV RLP PDUs.

## Patentansprüche

1. Ein Videodecodierungsverfahren, das Folgendes aufweist:
Generieren von Dateneinheiten der Multiplexierschicht bzw. Multiplex Layer, die Videodaten enthalten, basierend auf Dateneinheiten der physikalischen Schicht bzw. Physical Layer;
Einbetten eines Grenzmarkers in die Dateneinheiten der Multiplex Layer, um eine Grenze zwischen den Dateneinheiten der Physical Layer anzuzeigen;
Demultiplexen der Dateneinheiten der Multiplex Layer, um einen Videodatenrahmen zu generieren; und
Assoziieren eines detektierten Decodierungsfehlers mit einem Segment des Videodatenrahmens unter Verwendung der Grenzmarker.

2. Verfahren nach Anspruch 1, wobei der Grenzmarker einen Beginn einer verlorenen Dateneinheit der Physical Layer anzeigt.

3. Verfahren nach Anspruch 1, wobei das Einbetten eines Grenzmarkers Einbetten einer Vielzahl der Grenzmarker beinhaltet, um Grenzen zwischen einer Vielzahl von Dateneinheiten der Physical Layer zu identifizieren.

4. Verfahren nach Anspruch 1, wobei der Videodatenrahmen Makroblöcke von Videodaten beinhaltet, wobei das Verfahren weiter Concealen bzw. Verbergen von Makroblöcken in dem Segment des Videodatenrahmens aufweist.

5. Verfahren nach Anspruch 1, wobei der Videodatenrahmen Resynchronisationsmarker beinhaltet, wobei das Verfahren weiter Verbergen von Makroblöcken in dem Segment des Videodatenrahmens und von Makroblöcken bis zu einem nächsten der Resynchronisationsmarker, der dem detektierten Decodierfehler in dem Videodatenrahmen folgt, aufweist.

6. Verfahren nach Anspruch 1, das weiter Demultiplexen der Dateneinheiten der Multiplex Layer aufweist, um Dateneinheiten der Adaptionsschicht bzw. Adaptation Layer zu generieren, und Generieren der Videodatenrahmen basierend auf den Dateneinheiten der Adaptation Layer.

7. Verfahren nach Anspruch 1, das weiter Empfangen der Dateneinheiten der Physical Layer über Drahtloskommunikation aufweist.

8. Verfahren nach Anspruch 1, das weiter Demultiplexen der Einheiten der Multiplex Layer gemäß dem ITU-H.223-Multiplexing/Demultiplexing-Protokoll aufweist.

9. Verfahren nach Anspruch 1, das weiter Demultiplexen der Einheiten der Multiplex Layer gemäß dem RTP/UDP/IP-Multiplexing/Demultiplexing-Protokoll aufweist.

10. Verfahren nach Anspruch 1, wobei der Videodatenrahmen Makroblöcke von Videodaten beinhaltet, die zum MPEG-4-Standard konform sind.

11. Verfahren nach Anspruch 1, wobei der Videodatenrahmen Makroblöcke von Videodaten beinhaltet, die zu einem der ITU-H.263-, ITU-H-264- und MPEG-2-Protokolle konform sind.

12. Verfahren nach Anspruch 1, wobei die Dateneinheiten der Physical Layer W-CDMA-Funkverbindungssteuerungspaketdateneinheiten bzw. W-CDMA RLC PDUs (RLC PDUs = radio link control packet data units) beinhalten.

13. Verfahren nach Anspruch 12, wobei die Dateneinheiten der Multiplex Layer zum H.223-Multiplexing/Demultiplexing-Protokoll konform sind.

14. Verfahren nach Anspruch 1, wobei die Dateneinheiten der Physical Layer CDMA2000-1 x-Funkverbindungsprotokollpaketdateneinheiten bzw. CDMA2000 1x RLP PDUs (RLP PDUs = radio link protocol packet data units), CDMA2000 1x EV-DO RLP PDUs oder CDMA2000 EV-DV RLP PDUs beinhalten.

15. Verfahren nach Anspruch 1, wobei die Dateneinheiten der Multiplex Layer zum RTP/UDP/IP-Multiplexing/Demultiplexing-Protokoll konform sind.

16. Verfahren nach Anspruch 1, wobei die Dateneinheiten der Physical Layer Audio- und Videodaten beinhalten, und das Einbetten von Grenzmarkern Einbetten von Grenzmarkern in die Dateneinheiten der Multiplex Layer beinhaltet, um Grenzen zwischen Videoinformation in den Dateneinheiten der Physical Layer anzuzeigen.

17. Ein Videodecodiersystem, das Folgendes aufweist:
eine Demultiplexing-Engine zum Generieren von Dateneinheiten der Multiplexierschicht bzw. Multiplex Layer die Videodaten beinhalten, und zwar basierend auf Dateneinheiten der physikalischen Schicht bzw. Physical Layer, und zum Demultiplexen der Dateneinheiten der Multiplex Layer;
einen Grenzgenerator zum Einbetten eines Grenzmarkers in die Dateneinheiten der Multiplex Layer, um eine Grenze zwischen den Dateneinheiten der Physical Layer anzuzeigen; und
eine Videodecodier-Engine zum Decodieren eines Videodatenrahmens, der Videodaten enthält, und zum Assoziieren eines detektierten Decodierfehlers mit einem Segment des Videodatenrahmens unter Verwendung der Grenzmarker.

18. System nach Anspruch 17, wobei der Grenzmarker einen Beginn einer verlorenen Dateneinheit der Physical Layer identifiziert.

19. System nach Anspruch 17, wobei der Grenzgenerator eine Vielzahl von Grenzmarkern einbettet, um Grenzen zwischen einer Vielzahl von Dateneinheiten der Physical Layer zu identifizieren.

20. System nach Anspruch 17, das weiter einen Grenzdetektor zum Detektieren der Grenzen zwischen den Dateneinheiten der Physical Layer aufweist.

21. System nach Anspruch 17, wobei der Videodatenrahmen Makroblöcke von Videodaten beinhaltet, und die Decodier-Engine Makroblöcke in dem Segment des Videodatenrahmens verbirgt.

22. System nach Anspruch 17, wobei der Videodatenrahmen Resynchronisationsmarker beinhaltet, und die Decodier-Engine Makroblöcke in dem Segment des Videodatenrahmens und Makroblöcke bis zu einem nächsten der Resynchronisationsmarker, die dem detektierten Decodierfehler in dem Videodatenrahmen folgen, verbirgt.

23. System nach Anspruch 17, das weiter ein Adaptation-Layer-Modul aufweist zum Generieren von Dateneinheiten der Adaptation Layer basierend auf den demultiplexten Dateneinheiten der Multiplex Layer, und zum Generieren des Video-Datenrahmens basierend auf den Dateneinheiten der Adaptation Layer.

24. System nach Anspruch 17, das weiter einen Drahtlosempfänger zum Empfangen der Dateneinheiten der Physical Layer über Drahtloskommunikation aufweist.

25. System nach Anspruch 17, wobei die Demultiplexing-Engine Einheiten der Multiplex Layer gemäß dem ITU-H.223-Multiplexing/Demultiplexing-Protokoll demultiplext.

26. System nach Anspruch 17, wobei die Demultiplexing-Engine die Einheiten der Multiplex Layer gemäß dem RTP/UDP/IP-Multiplexing/Demultiplexing-Protokoll demultiplext.

27. System nach Anspruch 17, wobei der Videodatenrahmen Makroblöcke von Videodaten beinhaltet, die zum MPEG-4-Standard konform sind.

28. System nach Anspruch 17, wobei der Videodatenrahmen Makroblöcke von Videodaten beinhaltet, die zu einem der ITU-H.263-, ITU-H.264- und MPEG-2-Protokolle konform sind.

29. System nach Anspruch 17, wobei die Dateneinheiten der Physical Layer W-CDMA-Funkverbindungssteuerpaketdateneinheiten bzw. W-CDMA RLC PDUs (RLC PDUs = radio link control packet data units) beinhalten.

30. System nach Anspruch 29, wobei die Dateneinheiten der Multiplex Layer mit dem H.223-Multiplexing/Demultiplexing-Protokoll konform sind.

31. System nach Anspruch 17, wobei die Dateneinheiten der Physical Layer CDMA2000-1 x-Funkverbindungsprotokollpaketdateneinheiten bzw. CDMA2000 1x RLP PDUs (RLP PDUs = radio link protocol packet data units), CDMA2000 1x EV-DO RLP PDUs oder CDMA2000 EV-DV RLP PDUs beinhalten.

32. System nach Anspruch 17, wobei die Dateneinheiten der Multiplex Layer zum RTP/UDP/IP-Multiplexing/Demultiplexing-Protokoll konform sind.

33. System nach Anspruch 17, wobei die Dateneinheiten der Physical Layer Audio- und Videodaten beinhalten, und der Grenzgenerator die Grenzmarker in die Dateneinheiten der Multiplex Layer einbettet, um Grenzen zwischen Videoinformation in den Dateneinheiten der Physical Layer anzuzeigen.

34. Ein Videodemultiplexer, der Folgendes aufweist:
eine Demultiplexing-Engine zum Generieren von Dateneinheiten der Multiplexierschicht bzw. Multiplex Layer, die Videodaten beinhalten, und zwar basierend auf Dateneinheiten der physikalischen Schicht bzw. Physical Layer, und zum Demultiplexen der Dateneinheiten der Multiplex Layer; und
einen Grenzgenerator zum Einbetten eines Grenzmarkers in die Dateneinheiten der Multiplex Layer zum Anzeigen einer Grenze zwischen den Dateneinheiten der Physical Layer, um es einem Videodecodierer zu gestatten, einen detektierten Decodierfehler mit einem Segment eines Videodatenrahmens unter Verwendung der Grenzmarker zu assoziieren.

35. Demultiplexer nach Anspruch 34, wobei der Grenzmarker einen Beginn einer verlorenen Dateneinheit der Physical Layer identifiziert.

36. Demultiplexer nach Anspruch 34, wobei der Grenzgenerator eine Vielzahl von Grenzmarkern einbettet, um Grenzen zwischen einer Vielzahl von Dateneinheiten der Physical Layer zu identifizieren.

37. Demultiplexer nach Anspruch 34, der weiter einen Grenzdetektor zum Detektieren der Grenzen zwischen den Dateneinheiten der Physical Layer aufweist.

38. Demultiplexer nach Anspruch 34, wobei der Videodatenrahmen Makroblöcke von Videodaten beinhaltet, und die Decodier-Engine Makroblöcke in dem Segment des Videodatenrahmens verbirgt.

39. Demultiplexer nach Anspruch 34, wobei die Demultiplexing-Engine Einheiten der Multiplex Layer gemäß dem H.223-Multiplexing/Demultiplexing-Protokoll demultiplext.

40. Demultiplexer nach Anspruch 34, wobei die Demultiplexing-Engine die Dateneinheiten der Multiplex Layer gemäß dem RTP/UDP/IP-Multiplexing/Demultiplexing-Protokoll demultiplext.

41. Demultiplexer nach Anspruch 34, wobei der Videodatenrahmen Makroblöcke von Videodaten beinhaltet, die zum MPEG-4-Standard konform sind.

42. Demultiplexer nach Anspruch 34, wobei der Videodatenrahmen Makroblöcke von Videodaten beinhaltet, die zu einem der ITU-H.263-, ITU-H.264- und MPEG-2-Protokolle konform sind.

43. Demultiplexer nach Anspruch 34, wobei die Dateneinheiten der Physical Layer W-CDMA-Funkverbindungssteuerpaketdateneinheiten bzw. W-CDMA RLC PDUs (RLC PDUs = radio link control packet data units) beinhalten.

44. Demultiplexer nach Anspruch 43, wobei die Dateneinheiten der Multiplex Layer mit dem H.223-Multiplexing/Demultiplexing-Protokoll konform sind.

45. Demultiplexer nach Anspruch 34, wobei die Dateneinheiten der Physical Layer CDMA2000-1x-Funkverbindungsprotokollpaketdateneinheiten bzw. CDMA2000 1x RLP PDUs (RLP PDUs = radio link protocol packet data units), CDMA2000 1x EV-DO RLP PDUs oder CDMA2000 EV-DV RLP PDUs beinhalten.

46. Demultiplexer nach Anspruch 34, wobei die Dateneinheiten der Multiplex Layer zum RTP/UDP/IP-Multiplexing/Demultiplexing-Protokoll konform sind.

47. Demultiplexer nach Anspruch 34, wobei die Dateneinheiten der Physical Layer Audio- und Videodaten beinhalten, und der Grenzgenerator die Grenzmarker in die Dateneinheiten der Multiplex Layer einbettet, um Grenzen zwischen Videoinformation in den Dateneinheiten der Physical Layer anzuzeigen.

48. Eine Drahtloskommunikationseinrichtung, die Folgendes aufweist:
einen Drahtlosempfänger zum Empfangen von Dateneinheiten der physikalischen Schicht bzw. Physical Layer über Drahtloskommunikation, wobei die Dateneinheiten der Physical Layer Videodaten beinhalten;
eine Demultiplexing-Engine zum Generieren von Dateneinheiten der Multiplex Layer basierend auf den Dateneinheiten der Physical Layer, und zum Demultiplexen der Dateneinheiten der Multiplex Layer;
einen Grenzgenerator zum Einbetten eines Grenzmarkers in die Dateneinheiten der Multiplex Layer zum Anzeigen einer Grenze zwischen den Dateneinheiten der Physical Layer; und
eine Videodecodier-Engine zum Decodieren eines Videodatenrahmens, der Videodaten enthält, und zum Assoziieren eines detektierten Decodierfehlers in einem Segment des Videodatenrahmens unter Verwendung der Grenzmarker.

49. Einrichtung nach Anspruch 48, wobei der Grenzmarker einen Beginn einer verlorenen Dateneinheit der Physical Layer identifiziert.

50. Einrichtung nach Anspruch 48, wobei der Grenzgenerator eine Vielzahl von Grenzmarkern einbettet, um Grenzen zwischen einer Vielzahl von Dateneinheiten der Physical Layer zu identifizieren.

51. Ein Videodecodiersystem, das Folgendes aufweist:
Mittel zum Generieren von Dateneinheiten der Multiplex Layer, die Videodaten enthalten, und zwar basierend auf Dateneinheiten der Physical Layer;
Mittel zum Einbetten eines Grenzmarkers in die Dateneinheiten der Multiplex Layer, um eine Grenze zwischen den Dateneinheiten der Physical Layer anzuzeigen;
Mittel zum Demultiplexen der Dateneinheiten der Multiplex Layer zum Generieren eines Videodatenrahmens; und
Mittel zum Assoziieren eines detektierten Decodierfehlers mit einem Segment des Videodatenrahmens unter Verwendung der Grenzmarker.

52. System nach Anspruch 51, wobei der Grenzmarker einen Beginn einer verlorenen Dateneinheit der Physical Layer identifiziert.

53. System nach Anspruch 51, wobei die Mittel zum Einbetten Mittel zum Einbetten einer Vielzahl der Grenzmarkern beinhalten, um Grenzen zwischen einer Vielzahl von Dateneinheiten der Physical Layer zu identifizieren.

54. System nach Anspruch 51, wobei der Videodatenrahmen Makroblöcke von Videodaten beinhaltet, wobei das System weiter Mittel zum Verbergen von Makroblöcken in dem Segment des Videodatenrahmens aufweist.

55. System nach Anspruch 51, wobei der Videodatenrahmen Resynchronisationsmarker beinhaltet, wobei das System weiter Mittel zum Verbergen von Makroblöcken in dem Segment des Videodatenrahmens und von Makroblöcken bis zu einem nächsten der Resynchronisationsmarker, der dem detektierten Decodierfehler in dem Videodatenrahmen folgt, aufweist.

56. System nach Anspruch 51, wobei die Mittel zum Demultiplexen die Einheiten der Multiplex Layer gemäß den ITU-H.223-Multiplexing/Demultiplexing- oder RTP/UDP/IP-Multiplexing/Demultiplexing-Protokollen demultiplexen.

57. System nach Anspruch 51, wobei der Videodatenrahmen Makroblöcke von Videodaten beinhaltet, die zu einem der MPEG-4-, ITU-H.263-, ITU-H-264- und MPEG-2-Protokolle konform sind.

58. System nach Anspruch 51, wobei die Dateneinheiten der Physical Layer W-CDMA-Funkverbindungssteuerungspaketdateneinheiten bzw. W-CDMA RLC PDUs (RLC PDUs = radio link control packet data units), CDMA2000-1x-Funkverbindungsprotokollpaketdateneinheiten bzw. CDMA2000 1x RLP PDUs (RLP PDUs = radio link protocol packet data units), CDMA2000 1x EV-DO RLP PDUs oder CDMA2000 EV-DV RLP PDUs beinhalten.

59. Ein computerlesbares Medium, das Instruktionen aufweist, um einen oder mehrere Prozessoren zu Folgendem zu veranlassen:
Generieren von Dateneinheiten der Multiplexierschicht bzw. Multiplex Layer, die Videodaten enthalten, basierend auf Dateneinheiten der physikalischen Schicht bzw. Physical Layer;
Einbetten eines Grenzmarkers in die Dateneinheiten der Multiplex Layer, um eine Grenze zwischen den Dateneinheiten der Physical Layer anzuzeigen;
Demultiplexen der Dateneinheiten der Multiplex Layer, um einen Videodatenrahmen zu generieren; und
Assoziieren eines detektierten Decodierungsfehlers mit einem Segment des Videodatenrahmens unter Verwendung der Grenzmarker.

60. Computerlesbares Medium nach Anspruch 59, wobei der Grenzmarker einen Beginn einer verlorenen Dateneinheit der Physical Layer anzeigt.

61. Computerlesbares Medium nach Anspruch 59, das weiter Instruktionen aufweist, um den Prozessor zu veranlassen, eine Vielzahl von Grenzmarkern einzubetten, um Grenzen zwischen einer Vielzahl von Dateneinheiten der Physical Layer zu identifizieren.

62. Computerlesbares Medium nach Anspruch 59, wobei der Videodatenrahmen Makroblöcke von Videodaten beinhaltet, das weiter Instruktionen aufweist, um den Prozessor zu veranlassen, Makroblöcke in dem Segment des Videodatenrahmens zu verbergen.

63. Computerlesbares Medium nach Anspruch 59, wobei der Videodatenrahmen Resynchronisationsmarker beinhaltet, das weiter Instruktionen aufweist, um den Prozessor zu veranlassen, Makroblöcke in dem Segment des Videodatenrahmens und Makroblöcke bis zu einem nächsten der Resynchronisationsmarker, der dem detektierten Decodierfehler in dem Videodatenrahmen folgt, zu verbergen.

64. Computerlesbares Medium nach Anspruch 59, wobei die Instruktionen den Prozessor veranlassen, die Einheiten der Multiplex Layer gemäß den ITU-H.223-Multiplexing/Demultiplexing- oder RTP/UDP/IP-Multiplexing/Demultiplexing-Protokollen zu demultiplexen .

65. Computerlesbares Medium nach Anspruch 59, wobei der Videodatenrahmen Makroblöcke von Videodaten beinhaltet, die zu einem der MPEG-4-, ITU-H.263-, ITU-H-264- und MPEG-2-Protokolle konform sind.

66. Computerlesbares Medium nach Anspruch 59, wobei die Dateneinheiten der Physical Layer W-CDMA-Funkverbindungssteuerungspaketdateneinheiten bzw. W-CDMA RLC PDUs (RLC PDUs = radio link control packet data units), CDMA2000-1x-Funkverbindungsprotokollpaketdateneinheiten bzw. CDMA2000 1x RLP PDUs (RLP PDUs = radio link protocol packet data units), CDMA2000 1x EV-DO RLP PDUs oder CDMA2000 EV-DV RLP PDUs beinhalten.

## Revendications

1. Procédé de décodage vidéo comprenant :
générer des unités de données de couche de multiplexage contenant des données vidéo sur la base d'unités de données de couche physique ;
intégrer un marqueur de frontière dans les unités de données de couche de multiplexage pour indiquer une frontière entre les unités de données de couche physique ;
démultiplexer les unités de données de couche de multiplexage pour générer une trame de données vidéo ; et
associer une erreur de décodage détectée à un segment de la trame de données vidéo en utilisant les marqueurs de frontière.

2. Procédé selon la revendication 1, dans lequel le marqueur de frontière identifie le début d'une unité de données de couche physique perdue.

3. Procédé selon la revendication 1, dans lequel l'intégration du marqueur de frontière inclut l'intégration de plusieurs marqueurs de frontière pour identifier des frontières entre plusieurs des unités de données de couche physique.

4. Procédé selon la revendication 1, dans lequel la trame de données vidéo comprend des macroblocs de données vidéo, le procédé comprenant en outre la dissimulation de macroblocs dans le segment de la trame de données vidéo.

5. Procédé selon la revendication 1, dans lequel la trame de données vidéo comprend des marqueurs de resynchronisation, le procédé comprenant en outre la dissimulation de macroblocs dans le segment de la trame de données vidéo et de macroblocs jusqu'à un marqueur suivant des marqueurs de resynchronisation à la suite de l'erreur de décodage détectée dans la trame de données vidéo.

6. Procédé selon la revendication 1, comprenant en outre le démultiplexage des unités de données de couche de multiplexage pour générer des unités de données de couche d'adaptation, et la génération de la trame de données vidéo sur la base des unités de données de couche d'adaptation.

7. Procédé selon la revendication 1, comprenant en outre la réception des unités de données de couche physique par l'intermédiaire d'une communication sans fil.

8. Procédé selon la revendication 1, comprenant en outre le démultiplexage des unités de couche de multiplexage conformément au protocole de multiplexage/démultiplexage ITU H.223.

9. Procédé selon la revendication 1, comprenant en outre le démultiplexage des unités de couche de multiplexage conformément au protocole de multiplexage/démultiplexage RTP/UDP/IP.

10. Procédé selon la revendication 1, dans lequel la trame de données vidéo comprend des macroblocs de données vidéo conformes à la norme MPEG-4.

11. Procédé selon la revendication 1, dans lequel la trame de données vidéo comprend des macroblocs de données vidéo conformes à l'un des protocoles ITU H.263, ITU H.264 et MPEG-2.

12. Procédé selon la revendication 1, dans lequel les unités de données de couche physique comprennent des unités de données par paquets de commande de liaison radio (PDU RLC) W-CDMA.

13. Procédé selon la revendication 12, dans lequel les unités de données de couche de multiplexage sont conformes au protocole de multiplexage/démultiplexage H.223.

14. Procédé selon la revendication 1, dans lequel les unités de données de couche physique comprennent des unités de données par paquets de protocole de liaison radio (PDU RLP) CDMA2000 1x, des PDU RLP CDMA2000 1x EV-DO, ou des PDU RLP CDMA2000 EV-DV.

15. Procédé selon la revendication 1, dans lequel les unités de données de couche de multiplexage sont conformes au protocole de multiplexage/démultiplexage RTP/UDP/IP.

16. Procédé selon la revendication 1, dans lequel les unités de données de couche physique comprennent des données audio et vidéo, et l'intégration de marqueurs de frontière comprend l'intégration de marqueurs de frontière dans les unités de données de couche de multiplexage pour indiquer des frontières entre des informations vidéo dans les unités de données de couche physique.

17. Système de décodage vidéo comprenant :
un moteur de démultiplexage pour générer des unités de données de couche de multiplexage contenant des données vidéo sur la base d'unités de données de couche physique, et démultiplexer les unités de données de couche de multiplexage ;
un générateur de frontière pour intégrer un marqueur de frontière dans les unités de données de couche de multiplexage pour indiquer une frontière entre les unités de données de couche physique ; et
un moteur de décodage vidéo pour décoder une trame de données vidéo contenant les données vidéo, et associer une erreur de décodage détectée à un segment de la trame de données vidéo en utilisant les marqueurs de frontière.

18. Système selon la revendication 17, dans lequel le marqueur de frontière identifie le début d'une unité de données de couche physique perdue.

19. Système selon la revendication 17, dans lequel le générateur de frontière intègre plusieurs marqueurs de frontière pour identifier des frontières entre plusieurs des unités de données de couche physique.

20. Système selon la revendication 17, comprenant en outre un détecteur de frontière pour détecter les frontières entre les unités de données de couche physique.

21. Système selon la revendication 17, dans lequel la trame de données vidéo comprend des macroblocs de données vidéo, et le moteur de décodage dissimule des macroblocs dans le segment de la trame de données vidéo.

22. Système selon la revendication 17, dans lequel la trame de données vidéo comprend des marqueurs de resynchronisation, et le moteur de décodage dissimule des macroblocs dans le segment de la trame de données vidéo et des macroblocs jusqu'à un marqueur suivant des marqueurs de resynchronisation à la suite de l'erreur de décodage détectée dans la trame de données vidéo.

23. Système selon la revendication 17, comprenant en outre un module de couche d'adaptation pour générer des unités de données de couche d'adaptation sur la base des unités de données de couche de multiplexage démultiplexées, et générer la trame de données vidéo sur la base des unités de données de couche d'adaptation.

24. Système selon la revendication 17, comprenant en outre un récepteur sans fil pour recevoir les unités de données de couche physique par l'intermédiaire d'une communication sans fil.

25. Système selon la revendication 17, dans lequel le moteur de démultiplexage démultiplexe les unités de couche de multiplexage conformément au protocole de multiplexage/démultiplexage ITU H.223.

26. Système selon la revendication 17, dans lequel le moteur de démultiplexage démultiplexe les unités de couche de multiplexage conformément au protocole de multiplexage/démultiplexage RTP/UDP/IP.

27. Système selon la revendication 17, dans lequel la trame de données vidéo comprend des macroblocs de données vidéo conformes à la norme MPEG-4.

28. Système selon la revendication 17, dans lequel la trame de données vidéo comprend des macroblocs de données vidéo conformes à l'un des protocoles ITU H.263, ITU H.264 et MPEG-2.

29. Système selon la revendication 17, dans lequel les unités de données de couche physique comprennent des unités de données par paquets de commande de liaison radio (PDU RLC) W-CDMA.

30. Système selon la revendication 29, dans lequel les unités de données de couche de multiplexage sont conformes au protocole de multiplexage/démultiplexage H.223.

31. Système selon la revendication 17, dans lequel les unités de données de couche physique comprennent des unités de données par paquets de protocole de liaison radio (PDU RLP) CDMA2000 1x, des PDU RLP CDMA2000 1x EV-DO, ou des PDU RLP CDMA2000 EV-DV.

32. Système selon la revendication 17, dans lequel les unités de données de couche de multiplexage sont conformes au protocole de multiplexage/démultiplexage RTP/UDP/IP.

33. Système selon la revendication 17, dans lequel les unités de données de couche physique comprennent des données audio et vidéo, et le générateur de frontière intègre les marqueurs de frontière dans les unités de données de couche de multiplexage pour indiquer des frontières entre des informations vidéo dans les unités de données de couche physique.

34. Démultiplexeur vidéo comprenant :
un moteur de démultiplexage pour générer des unités de données de couche de multiplexage contenant des données vidéo sur la base d'unités de données de couche physique, et démultiplexer les unités de données de couche de multiplexage ; et
un générateur de frontière pour intégrer un marqueur de frontière dans les unités de données de couche de multiplexage pour indiquer une frontière entre les unités de données de couche physique pour permettre à un décodeur vidéo d'associer une erreur de décodage détectée à un segment d'une trame de données vidéo en utilisant les marqueurs de frontière.

35. Démultiplexeur selon la revendication 34, dans lequel le marqueur de frontière identifie le début d'une unité de données de couche physique perdue.

36. Démultiplexeur selon la revendication 34, dans lequel le générateur de frontière intègre plusieurs marqueurs de frontière pour identifier des frontières entre plusieurs des unités de données de couche physique.

37. Démultiplexeur selon la revendication 34, comprenant en outre un détecteur de frontière pour détecter les frontières entre les unités de données de couche physique.

38. Démultiplexeur selon la revendication 34, dans lequel la trame de données vidéo comprend des macroblocs de données vidéo, et le moteur de décodage dissimule des macroblocs dans le segment de la trame de données vidéo.

39. Démultiplexeur selon la revendication 34, dans lequel le moteur de démultiplexage démultiplexe les unités de données de couche de multiplexage conformément au protocole de multiplexage/démultiplexage H.223.

40. Démultiplexeur selon la revendication 34, dans lequel le moteur de démultiplexage démultiplexe les unités de données de couche de multiplexage conformément au protocole de multiplexage/démultiplexage RTP/UDP/IP.

41. Démultiplexeur selon la revendication 34, dans lequel la trame de données vidéo comprend des macroblocs de données vidéo conformes à la norme MPEG-4.

42. Démultiplexeur selon la revendication 34, dans lequel la trame de données vidéo comprend des macroblocs de données vidéo conformes à l'un des protocoles ITU H.263, ITU H.264 et MPEG-2.

43. Démultiplexeur selon la revendication 34, dans lequel les unités de données de couche physique comprennent des unités de données par paquets de commande de liaison radio (PDU RLC) W-CDMA.

44. Démultiplexeur selon la revendication 43, dans lequel les unités de données de couche de multiplexage sont conformes au protocole de multiplexage/démultiplexage H.223.

45. Démultiplexeur selon la revendication 34, dans lequel les unités de données de couche physique comprennent des unités de données par paquets de protocole de liaison radio (PDU RLP) CDMA2000 1x, des PDU RLP CDMA2000 1x EV-DO, ou des PDU RLP CDMA2000 EV-DV.

46. Démultiplexeur selon la revendication 34, dans lequel les unités de données de couche de multiplexage sont conformes au protocole de multiplexage/démultiplexage RTP/UDP/IP.

47. Démultiplexeur selon la revendication 34, dans lequel les unités de données de couche physique comprennent des données audio et vidéo, et le générateur de frontière intègre les marqueurs de frontière dans les unités de données de couche de multiplexage pour indiquer des frontières entre des informations vidéo dans les unités de données de couche physique.

48. Dispositif de communication sans fil comprenant :
un récepteur sans fil pour recevoir des unités de données de couche physique par l'intermédiaire d'une communication sans fil, les unités de données de couche physique contenant des données vidéo ;
un moteur de démultiplexage pour générer des unités de données de couche de multiplexage sur la base des unités de données de couche physique, et démultiplexer les unités de données de couche de multiplexage ;
un générateur de frontière pour intégrer un marqueur de frontière dans les unités de données de couche de multiplexage pour indiquer une frontière entre les unités de données de couche physique ; et
un moteur de décodage vidéo pour décoder une trame de données vidéo contenant les données vidéo, et associer une erreur de décodage détectée à un segment de la trame de données vidéo en utilisant les marqueurs de frontière.

49. Dispositif selon la revendication 48, dans lequel le marqueur de frontière identifie le début d'une unité de données de couche physique perdue.

50. Dispositif selon la revendication 48, dans lequel le générateur de frontière intègre plusieurs marqueurs de frontière pour identifier des frontières entre plusieurs des unités de données de couche physique.

51. Système de décodage vidéo comprenant :
des moyens pour générer des unités de données de couche de multiplexage contenant des données vidéo sur la base d'unités de données de couche physique ;
des moyens pour intégrer un marqueur de frontière dans les unités de données de couche de multiplexage pour indiquer une frontière entre les unités de données de couche physique ;
des moyens pour démultiplexer les unités de données de couche de multiplexage pour générer une trame de données vidéo ; et
des moyens pour associer une erreur de décodage détectée à un segment de la trame de données vidéo en utilisant les marqueurs de frontière.

52. Système selon la revendication 51, dans lequel le marqueur de frontière identifie le début d'une unité de données de couche physique perdue.

53. Système selon la revendication 51, dans lequel les moyens pour intégrer comprennent des moyens pour intégrer plusieurs marqueurs de frontière pour identifier des frontières entre plusieurs des unités de données de couche physique.

54. Système selon la revendication 51, dans lequel la trame de données vidéo comprend des macroblocs de données vidéo, le système comprenant en outre des moyens pour dissimuler des macroblocs dans le segment de la trame de données vidéo.

55. Système selon la revendication 51, dans lequel la trame de données vidéo comprend des marqueurs de resynchronisation, le système comprenant en outre des moyens pour dissimuler des macroblocs dans le segment de la trame de données vidéo et des macroblocs jusqu'à un marqueur suivant des marqueurs de resynchronisation à la suite de l'erreur de décodage détectée dans la trame de données vidéo.

56. Système selon la revendication 51, dans lequel les moyens de démultiplexage démultiplexent les unités de couche de multiplexage selon les protocoles de multiplexage/démultiplexage ITU H.223 ou RTP/UDP/IP.

57. Système selon la revendication 51, dans lequel la trame de données vidéo comprend des macroblocs de données vidéo conformes aux protocoles MPEG-4, ITU H.263, ITU H.264 ou MPEG-2.

58. Système selon la revendication 51, dans lequel les unités de données de couche physique comprennent des unités de données par paquets de commande de liaison radio (PDU RLC) W-CDMA, des unités de données par paquets de protocole de liaison radio (PDU RLP) CDMA2000 1x, des PDU RLP CDMA2000 1x EV-DO, ou des PDU RLP CDMA2000 EV-DV.

59. Support lisible par un ordinateur comprenant des instructions pour amener un ou plusieurs processeurs à :
générer des unités de données de couche de multiplexage contenant des données vidéo sur la base d'unités de données de couche physique ;
intégrer un marqueur de frontière dans les unités de données de couche de multiplexage pour indiquer une frontière entre les unités de données de couche physique ;
démultiplexer les unités de données de couche de multiplexage pour générer une trame de données vidéo ; et
associer une erreur de décodage détectée à un segment de la trame de données vidéo en utilisant les marqueurs de frontière.

60. Support lisible par un ordinateur selon la revendication 59, dans lequel le marqueur de frontière identifie le début d'une unité de données de couche physique perdue.

61. Support lisible par un ordinateur selon la revendication 59, comprenant en outre des instructions pour amener le processeur à intégrer plusieurs marqueurs de frontière pour identifier des frontières entre plusieurs des unités de données de couche physique.

62. Support lisible par un ordinateur selon la revendication 59, dans lequel la trame de données vidéo comprend des macroblocs de données vidéo, comprenant en outre des instructions pour amener le processeur à dissimuler des macroblocs dans le segment de la trame de données vidéo.

63. Support lisible par un ordinateur selon la revendication 59, dans lequel la trame de données vidéo comprend des marqueurs de resynchronisation, comprenant en outre des instructions pour amener le processeur à dissimuler des macroblocs dans le segment de la trame de données vidéo et des macroblocs jusqu'à un marqueur suivant des marqueurs de resynchronisation à la suite de l'erreur de décodage détectée dans la trame de données vidéo.

64. Support lisible par un ordinateur selon la revendication 59, dans lequel les instructions amènent le processeur à démultiplexer les unités de couche de multiplexage selon les protocoles de multiplexage/démultiplexage ITU H.223 ou RTP/UDP/IP.

65. Support lisible par un ordinateur selon la revendication 59, dans lequel la trame de données vidéo comprend des macroblocs de données vidéo conformes aux protocoles MPEG-4, ITU H.263, ITU H.264 ou MPEG-2.

66. Support lisible par un ordinateur selon la revendication 59, dans lequel les unités de données de couche physique comprennent des unités de données par paquets de commande de liaison radio (PDU RLC) W-CDMA, des unités de données par paquets de protocole de liaison radio (PDU RLP) CDMA2000 1x, des PDU RLP CDMA2000 1x EV-DO, ou des PDU RLP CDMA2000 EV-DV.
